# EUROPEAN PATENT SPECIFICATION

(11) **EP 4 175 035 B1**
(45) Date of publication and mention of the grant of the patent: **08.10.2025**
(21) Application number: 21861890.8
(22) Date of filing: 21.07.2021
(51) Int. Cl.: H01M 50/211, H01M 50/291, H01M 50/293, H01M 50/262, H01M 50/242, H01M 50/244

(54) **LARGE-SIZED BATTERY MODULE AND BATTERY PACK INCLUDING SAME**
GROSSFLÄCHIGES BATTERIEMODUL UND BATTERIEPACK DAMIT
MODULE DE BATTERIE DE GRANDE TAILLE ET BLOC-BATTERIE LE COMPRENANT

(30) Priority: 26.08.2020 KR 20200107804
(43) Date of publication of application: 03.05.2023
(73) Proprietor: LG Energy Solution, Ltd., Seoul 07335 (KR)
(72) Inventor: KIM, Dae-Gil, Daejeon 34122 (KR); BAEK, Seung-Ryul, Daejeon 34122 (KR); KWAK, Jung-Min, Daejeon 34122 (KR); CHO, Gue-Tae, Daejeon 34122 (KR)
(74) Representative: Goddar, Heinz J.
(86) International application number: PCT/KR2021/009450
(87) International publication number: WO 2022/045591

(56) References cited:
- EP-A1- 3 565 023
- CN-A- 111 162 221
- CN-U- 207 818 693
- CN-U- 211 045 543
- JP-A- 2011 204 395
- KR-A- 20130 035 461

## Description

### TECHNICAL FIELD

The present disclosure relates to a battery module, and more particularly, to a battery module having a structure for increasing mechanical rigidity of a large-sized battery module having a large width, increasing assembly convenience, and preventing thermal runaway propagation, and a battery pack including the battery module.

The present application claims priority to Korean Patent Application No. 10-2020-0107804 filed on August 26, 2020 in the Republic of Korea.

### BACKGROUND ART

While one secondary battery cell or a couple of secondary battery cells are used per small mobile device, in middle- to large-sized devices such as electric vehicles, a middle- to large-sized battery module formed by electrically connecting a large number of secondary battery cells is used due to the need for high output and high capacity, and a battery pack implemented by connecting a plurality of these battery modules is used.

In general, since a battery pack for electric vehicles is mounted in a vehicle body or a trunk space, each battery module constituting the battery pack is to have a volume as small as possible and a very high energy density at the same time. For this reason, battery modules are increasingly configured using pouch-type battery cells that are easy to stack and have a high energy density to volume.

In addition, a battery pack or battery module for electric vehicles is to be able to protect battery cells in an environment with continuous vibration and impact. Therefore, a structure for accommodating battery cells, such as a module housing, is to have structural stability that prevents deformation despite vibration or impact applied from the inside or outside.

Recently, as the demand for increasing the mileage of electric vehicles increases, the number and size of battery cells included in a unit battery module are increasing in order to secure the capacity of a battery pack to meet the demand. For example, in general, the width of a module housing of a battery module that is widely produced was approximately 150 mm to 250 mm, but recently, the width has been increased to about 800 mm, thereby increasing the number of battery cells accommodated in one battery module by about three to four times or more. A battery pack including a large-sized battery module as above may include more battery cells compared to other battery packs of the same volume, and thus has a higher energy density and a smaller number of battery modules, thereby further simplifying the assembly structure.

While the large-sized battery module has advantages in terms of energy density and space efficiency, there are several structural disadvantages.

For example, since a width of a module housing of a large-sized battery module is greater than those of battery modules according to the related art, deformation of the module housing occurs more easily due to the self-load, vibration or impact, or pressure during swelling of battery cells. In particular, a center portion of the module housing is significantly deformed in a width direction.

In addition, the battery module has a structure in which battery cells are densely packed, and accordingly, when thermal runaway (accompanied by heat/flame) occurs in one battery cell, the thermal runaway may easily propagate to other battery cells in the vicinity. A large-sized or large-area battery module which has more battery cells than the existing ones has thus a higher risk of secondary accidents due to thermal runaway of battery cells.

The prior art relevant to the present invention is given by EP 3 565 023 A1, KR 2013 0035461 A, CN 211 045 543 U, JP 2011 204395 A, CN 111 162 221 A and CN 207 818 693 U. It is known from the prior art a battery pack including a pack housing and a plurality of battery modules accommodated in the pack housing, wherein the pack housing has openings formed at both sides thereof to communicate with each other and also has a plurality of guide grooves. The battery module is accommodated into or removed from an inner pace of the pack housing through the opening by sliding along the guide grooves.

### DISCLOSURE

### Technical Problem

The present disclosure is designed to solve the problems of the related art, and therefore the present disclosure is directed to providing a structure for increasing the mechanical rigidity of large-size battery modules having a large width and for preventing propagation of thermal runaway of battery cells.

The present disclosure is also directed to omitting or simplifying parts required for an assembly structure of a module housing, a fixing structure of battery cells, or arrangement of an electrode terminal, in order to reduce an increase in a weight of a battery module according to the accommodation of battery cells as many as possible in the battery module.

However, the technical objectives to be solved by the present disclosure are not limited to the above ones, and other objectives not mentioned herein will be clearly understood by those skilled in the art from the description of the present disclosure given below.

### Technical Solution

The present invention is defined according to the subject matter of the appended independent claim. Particular embodiments are given by the additional features of the appended dependent claims. In one aspect of the present disclosure, there is provided a battery module including: a cell stack structure including a plurality of unit stacks each including stacked battery cells; a module housing accommodating the cell stack structure; and a structural reinforcement beam arranged in parallel with the battery cells and arranged between adjacent unit stacks, wherein upper and lower end portions of the structural reinforcement beam are respectively partially inserted into and fixedly coupled to an upper surface and a lower surface of the module housing such that the unit stacks are spatially spaced apart from each other.

The structural reinforcement beam may be formed of a rigid material and have a plate shape having an area corresponding to a broad surface of the battery cells.

The structural reinforcement beam includes: a wall portion arranged to stand in an inner space of the module housing; and insertion protrusions protruding from an upper end of the wall portion and a lower end of the wall portion in a length direction of the wall portion at certain intervals.

The module housing may include insertion holes that are formed to penetrate through the upper and lower surfaces of the module housing at positions respectively corresponding to the insertion protrusions on a one-on-one basis.

Ends of the insertion protrusions may be welded to the module housing while the insertion protrusions are respectively inserted into the insertion holes by interference fit.

The structural reinforcement beam may further include a flame retardant attached to at least one surface of the wall portion.

The flame retardant may include a mica sheet or a silicon pad.

The wall portion includes: an outer frame that is in a form of a frame having an empty inner region and formed of a material having a high mechanical rigidity; and a mica sheet which has the same thickness as the outer frame and is inserted into the inner region of the outer frame.

The module housing may include: a U-frame including a base plate and a pair of side plates respectively supporting a lower portion and both side portions of the cell stack structure; an upper plate covering an upper portion of the cell stack structure; and a front plate and a rear plate respectively covering a front portion and a rear portion of the cell stack structure.

The base plate and the pair of side plates of the U-frame may be integrally formed as a single body, and the U-frame may be welded to the upper plate, the front plate, and the rear plate.

The battery module may further include a pair of terminal supporting members provided in an upper left corner region and an upper right corner region of the front plate and connected to a positive electrode terminal and a negative electrode terminal protruding forward from the cell stack structure.

The terminal supporting members may include: a body portion formed of an insulating material; a screw hole formed in the body portion in a vertical direction; and a terminal slit formed horizontally in an upper portion of the screw hole such that the positive electrode terminal or the negative electrode terminal passes through the terminal slit.

The structural reinforcement beam may include: a pair of wall portions facing each other and spaced apart from each other; and a pair of connection portions respectively formed at a position downwardly spaced apart from an upper end of the pair of wall portions by a certain distance and at a position upwardly spaced apart from a lower end of the pair of wall portions by a certain distance, the pair of connection portions connecting the pair of wall portions to each other.

The upper end of the pair of wall portions may be exposed to the upper portion of the module housing and include at least one handling hole formed in the exposed region.

In another aspect of the present disclosure, there is provided a battery pack including the battery module described above.

### Advantageous Effects

According to an aspect of the present disclosure, a structural reinforcement beam is connected to upper and lower surfaces of a module housing to support the upper and lower surfaces of the module housing, thereby increasing the mechanical rigidity of a battery module. In particular, as the structural reinforcement beam is located between adjacent unit stack structures, not only deformation of a center portion of the battery module may be prevented, but expansion due to swelling of battery cells may also be prevented effectively.

In addition, as the unit stack structures are spatially isolated by the structural reinforcement beam, propagation of thermal runaway among the unit stack structures may be prevented in an emergency.

According to another aspect of the present disclosure, parts required for an assembly structure of a module housing, a fixing structure of battery cells, an installation structure of electrode terminals, or the like, are omitted or simplified, and thus, the increase in the total weight of a battery module with respect to the number of battery cells accommodated in the battery module may be reduced as much as possible.

### DESCRIPTION OF DRAWINGS

FIG. 1 is a schematic exploded perspective view of a battery module according to an embodiment of the present disclosure.
FIG. 2 is a combined perspective view of FIG. 1.
FIGS. 3 and 4 are diagrams illustrating before and after assembling a terminal supporting member and an electrode terminal portion of FIG. 1.
FIG. 5 is a cross-sectional view cut along line A-A' of FIG. 2.
FIG. 6 is a perspective view illustrating a configuration of a structural reinforcement beam according to an embodiment of the present disclosure.
FIG. 7 is a combined perspective view of the structural reinforcement beam of FIG. 6.
FIG. 8 is an enlarged perspective view of region B of FIG. 2.
FIGS. 9 and 10 are respectively an exploded perspective view and a combined perspective view of a structural reinforcement beam according to another embodiment of the present disclosure.
FIG. 11 is a view corresponding to FIG. 5, illustrating a partial cross-sectional view of a battery module according to another embodiment of the present disclosure.
FIG. 12 are views illustrating a structural reinforcement beam according to another embodiment of the present disclosure.
FIG. 13 is a view illustrating an upper surface of a battery module, to which the structural reinforcement beam of FIG. 12 is applied.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

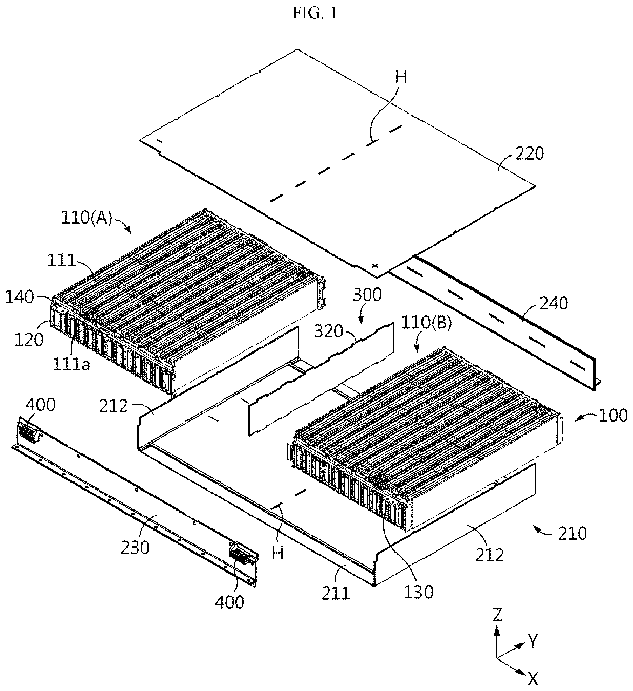

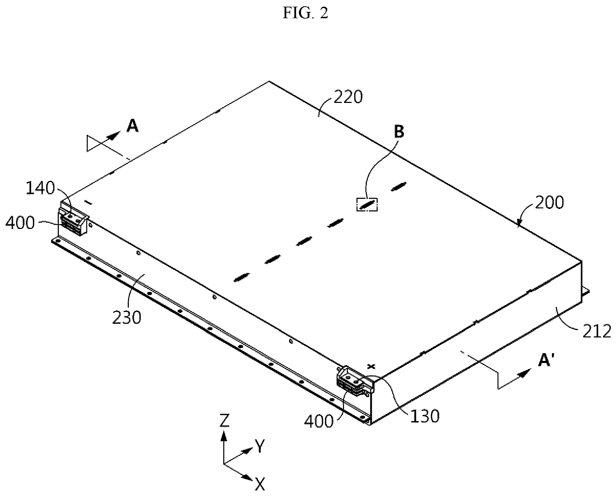

FIG. 1 is a schematic exploded perspective view of a battery module according to an embodiment of the present disclosure. FIG. 2 is a combined perspective view of FIG. 1.

Referring to the above drawings, a battery module according to an embodiment of the present disclosure includes a cell stack structure 100, a module housing 200, and a structural reinforcement beam 300.

The cell stack structure 100 includes a plurality of unit stacks 110 each including stacked battery cells 111. Each unit stack 110 includes a plurality of battery cells 111 that are stacked with broad surfaces thereof facing each other. The cell stack structure 100 according to the present embodiment includes a first unit stack 110A and a second unit stack 110B, and the structural reinforcement beam 300 is arranged between the first unit stack 110A and the second unit stack 110B. In the present embodiment, although only the case where there are two unit stacks 110 is illustrated, this is an example, and the number of unit stacks 110 may be three or more, and in this case, the number of structural reinforcement beams 300 may also be increased.

As the battery cells 111 forming the unit stacks 110, pouch-type battery cells 111 may be applied. The pouch-type battery cells 111 may include an electrode assembly, an electrolyte, and a pouch exterior material. The pouch exterior material may include two pouches, and a concave inner space may be formed in at least one of the two pouches. The electrode assembly and the electrolyte may be accommodated in the inner space of the pouch exterior material. Sealing portions may be provided on the outer peripheral surfaces of the two pouches, and as the sealing portions are fused to each other, the inner space in which the electrode assembly is accommodated may be sealed.

An electrode lead 111a may be attached to the electrode assembly, and the electrode lead 111a may be arranged between the sealing portions of the pouch exterior material and exposed to the outside of the pouch exterior material to function as an electrode terminal of the battery cells 111.

The pouch-type battery cells 111 stand vertically and are stacked horizontally such that broad surfaces thereof face each other to form the unit stack 110. A lower end of the unit stack 110 may be fixed to a lower surface of the module housing 200 by using a thermally conductive adhesive to thereby prevent shaking of the battery cells 111 and also dissipate heat generated during charging or discharging through the lower surface of the module housing 200.

A bus bar frame 120 may be mounted at the front and rear of each unit stack 110. A plurality of bus bars 121 provided in the form of a metal plate may be provided in the bus bar frame 120 in a preset pattern. The electrode leads 111a of the battery cells 111 may be drawn out to an outer surface of the bus bar frame 120 through a long hole (not shown) drilled in the bus bar frame 120, and may be connected to a bus bar on the outer surface of the bus bar frame 120. For example, the battery cells 111 may be connected to each other in series and/or in parallel by welding positive electrode leads of any two or more battery cells 111 and negative electrode leads of another two or more battery cells 111 to one bus bar.

The module housing 200 may be provided in an approximately hexahedral structure formed of a material such as metal having high mechanical rigidity, to accommodate the cell stack structure 100 and protect the same from external impact or vibrations. For example, as illustrated in FIGS. 1 and 2, the module housing 200 may be formed in a hexahedral structure including a base plate 211 supporting a lower portion of the cell stack structure 100, a pair of side plates 212 supporting both side portions of the cell stack structure 100, an upper plate 220 covering an upper portion of the cell stack structure 100, and a front plate 230 and a rear plate 240 respectively covering a front portion and a rear portion of the cell stack structure 100. In the present embodiment, the base plate 211 and the pair of side plates 212 may be integrally provided in a form of a U-frame 210.

The U-frame 210 and the other three plates (the upper plate 220, the front plate 230, and the rear plate 240) forming the module housing 200 may be coupled to each other by welding. For reference, a bolt fastening method is disadvantageous in terms of providing the module housing 200 that is lightweight, because the method involves addition of bolt/nut parts and an increase in a thickness of portions where bolts are fastened. Thus, in the present embodiment, in order to provide the module housing 200 that is lightweight, the U-frame 210 and the other three plates are welded and connected without using bolts/nuts.

An upper end of the bus bar 121 that is connected to the positive electrode lead of the battery cell 111 located in an outermost portion of the cell stack 100 may be provided in a form that is bent to protrude in the cell stack structure 100 toward the front (-Y-axis direction), and the bent portion may be configured to be drawn out of the module housing 200 and thus function as a positive electrode terminal 130 of the battery module. In substantially the same structure as the positive electrode terminal, a bent upper end of the bus bar 121 connected to a negative electrode lead of the battery cell 111 located in the other outermost portion of the cell stack structure 100 may be configured to be drawn out of the module housing 200 and function as a negative electrode terminal 140 of the battery module.

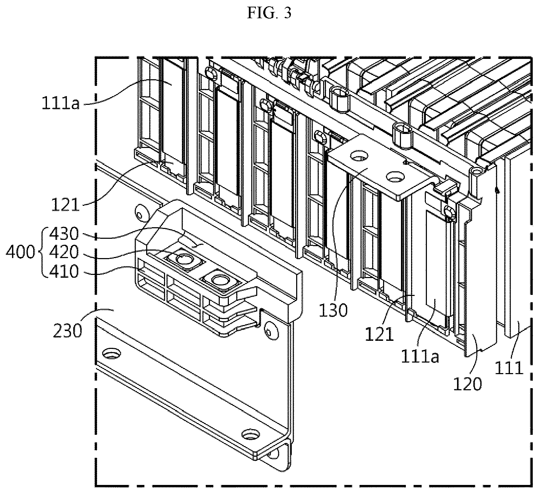

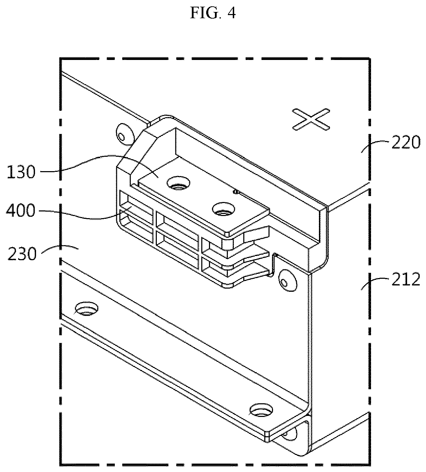

Referring to FIGS. 2 through 4, the battery module according to the present disclosure further includes a pair of terminal supporting members 400 provided in an upper left corner region and an upper right corner region of the front plate 230 to efficiently support and protect the positive electrode terminal 130 and the negative electrode terminal 140 of the battery module by using a minimum number of parts.

The pair of terminal supporting members 400 are configured such that, when arranging the front plate 230 on a front surface of the U-frame 210, the terminal supporting members 400 are easily connected to the positive electrode terminal 130 and the negative electrode terminal 140 of the battery module by pushing in the terminal supporting members 400.

The terminal supporting members 400 include a body portion 410 formed of an insulating material, a screw hole 420 formed in the body portion 410 in a vertical direction, and a terminal slit 430 formed horizontally above the screw hole 420.

The positive electrode terminal 130 or the negative electrode terminal 140 may be horizontally arranged above the body portion 410 through the terminal slit 430. The positive electrode terminal 130 or the negative electrode terminal 140 seated above of the body 410 may be bolted together with, for example, a ring terminal (not shown) of an external cable. In this case, the screw hole 420 may be used for fastening a bolt, and a rib structure may be applied to the body portion 410 to sufficiently withstand a bolt fastening pressure.

In the module housing 200 according to the present embodiment, a width of the U-frame 210 (±X-axis direction) may be provided to be about 800 mm to accommodate a large number of battery cells 111 in the width direction.

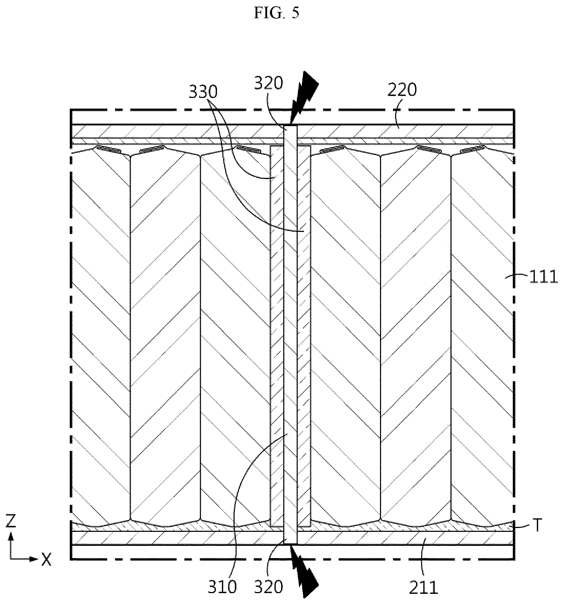

The structural reinforcement beam 300 may be coupled to a center of the U-frame 210. The structural reinforcement beam 300 is a structure for reinforcing the vulnerability of a center portion of the U-frame 210 having a long width, to external loads, and as illustrated in FIG. 5, upper and lower end portions of the structural reinforcement beam 300 are fixedly coupled to the upper and lower surfaces of the module housing 200, respectively. This structural reinforcement beam 300 supports center portions of the base plate 211 and the upper plate 220, and may distribute a load applied to the base plate 211 and the upper plate 220 in the event of an external impact.

In addition, the structural reinforcement beam 300 according to the present embodiment is arranged between the unit stacks 110 that are adjacent to each other to thereby block movement of thermal movement among the unit stacks 110 and perform a function as a firewall to block propagation of flames in an emergency, for example, in a fire, particularly.

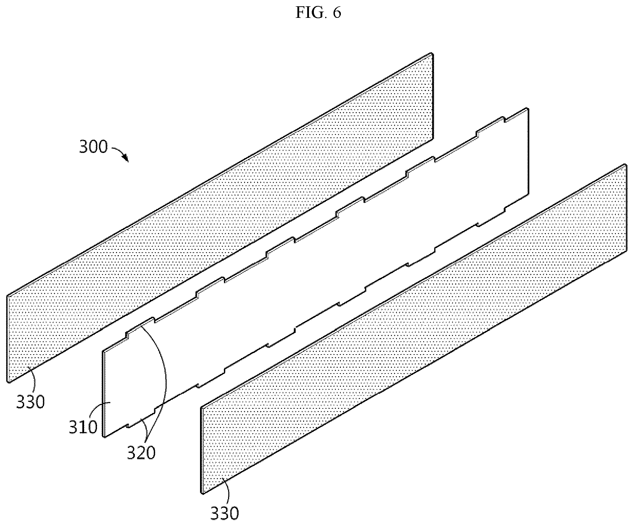

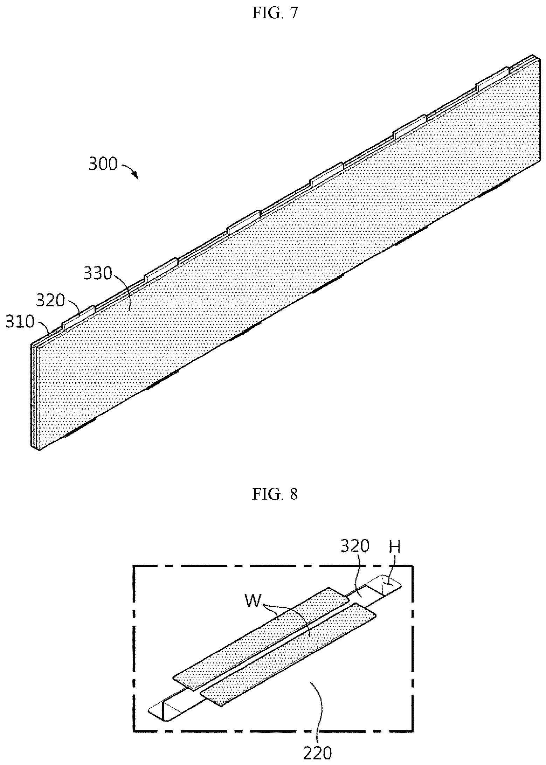

Hereinafter, a configuration of the structural reinforcement beam 300 will be described in detail with reference to FIGS. 5 through 8.

The structural reinforcement beam 300 according to the present embodiment is formed of a material with high mechanical rigidity and has a substantially plate shape, and includes a wall portion 310 that stands in an inner space of the module housing 200 and insertion protrusions 320 protruding from an upper end of the wall portion 310 and a lower end of the wall portion 310 at certain intervals in a length direction of the wall portion 310.

The wall portion 310 may have an area corresponding to the broad surface of the battery cells 111 and may be arranged between the adjacent unit stacks 110 in parallel with the battery cells 111.

Six insertion protrusions 320 are provided at the upper end of the wall portion 310 and six at the lower end of the wall portion 310, in the form of rectangular blocks and at equal intervals. Ends of the insertion protrusions 320 may be welded to the module housing 200 while the insertion protrusions 320 are inserted into insertion holes H via interference fit, wherein the insertion holes H are penetrated through the upper and lower surfaces of the module housing 200 at positions respectively corresponding to the insertion protrusions 320 on a one-on-one basis.

In other words, the six insertion protrusions 320 at the lower end of the wall portion 310 are respectively inserted into the six insertion holes H provided in the base plate 211 to perpendicularly assemble the structural reinforcement beam 300 to the base plate 211, and then the ends of the six insertion protrusions 320 and the base plate 211 are laser-welded from a direction of an outer side surface of the base plate 211, thereby completely fixing the lower end portion of the structural reinforcement beam 300 to the base plate 211.

Like the lower end portion of the structural reinforcement beam 300, also in the upper end portion of the structural reinforcement beam 300, the six insertion protrusions 320 at the upper end of the wall portion 310 are respectively inserted into six insertion holes H provided in the upper plate 220, and then the ends of the six insertion protrusions 320 and the upper plate 220 are laser-welded from a direction of an outer side surface of the upper plate 220, thereby completely fixing the upper end portion of the structural reinforcement beam 300 to the upper plate 220.

Accordingly, a welding portion W is formed at a coupling portion between the insertion protrusions 320 at the lower end and the base plate 211 and a coupling portion between the insertion protrusions 320 at the upper end and the upper plate 220.

After welding the U-frame 210 and the lower end portion of the structural reinforcement beam 300, it is easy in terms of the process to dispose the first unit stack 110A and the second unit stack 110B before welding the upper end portion of the structural reinforcement beam 300 and the upper plate 220. Here, the battery cell 111 at a leftmost portion of the first unit stack 110A and the battery cell 111 at a rightmost portion of the first unit stack 110A may be arranged in contact with a left side plate 212 and a left side of the structural reinforcement beam 300, respectively, and the battery cell 111 at a leftmost portion and the battery cell 111 at a rightmost portion of the second unit stack 110B may be arranged in contact with a right side of the structural reinforcement beam 300 and a right side plate 212, respectively.

According to this configuration, the structural reinforcement beam 300 may absorb an expansion pressure during swelling of the battery cells 111, thereby reducing deformation of the module housing 200.

Assuming that there is no structural reinforcement beam 300 inside the module housing 200, the expansion pressure acts on the left side plate 212 and the right side plate 212 when the battery cells 111 swell. As the swelling of the battery cells 111 increases, the possibility of deformation of the left side plate 212 and the right side plate 212 increases.

However, according to the present embodiment, the upper and lower end portions of the structural reinforcement beam 300 are fixedly connected to the upper plate 220 and the base plate 211, and thus the expansion pressure acts on the left side plate 212 and the structural reinforcement beam 300 during swelling of the first unit stack 110A, and during swelling of the second unit stack 110B, the expansion pressure acts on the right side plate 212 and the structural reinforcement beam 300.

Thus, the structural reinforcement beam 300 may not only partially absorb the expansion pressure of the first and second unit stacks 110B, but the expansion pressure of the first unit stack 110A and the expansion pressure of the second unit stack 110B may also act in an opposite direction with respect to the structural reinforcement beam 300 to partially offset the force, and thus a weight load on the left side plate 212 and the right side plate 212 may be reduced to reduce deformation of the module housing 200.

The structural reinforcement beam 300 according to the present embodiment further includes a flame retardant 330 attached to at least one surface of the wall portion 310.

As the flame retardant 330, a mica sheet or a silicon pad may be employed. As an alternative to the mica sheet or silicone pad, a flame-retardant plate, a flame-retardant fiber plate, a flame-retardant plastic plate, etc. may be employed, which do not deform, emit flames, or break in heat for six minutes (maximum temperature of about 500 degrees Celsius).

Even when the wall portion 310 is formed of a metal material with high mechanical rigidity and high thermal conductivity, the first unit stack 110A and the second unit stack 110B may be thermally blocked by coating both sides of the wall portion 310 with the flame retardant 330.

In this case, for example, when thermal runaway (accompanied by heat/flame) occurs in a specific battery cell 111 of the first unit stack 110A, the wall portion 310 coated with a flame retardant blocks or delays propagation of heat and flames to the second unit stack 110B, thereby preventing rapid diffusion of flames and heat inside the battery module.

Next, another embodiment of the present disclosure will be described with reference to the following drawings.

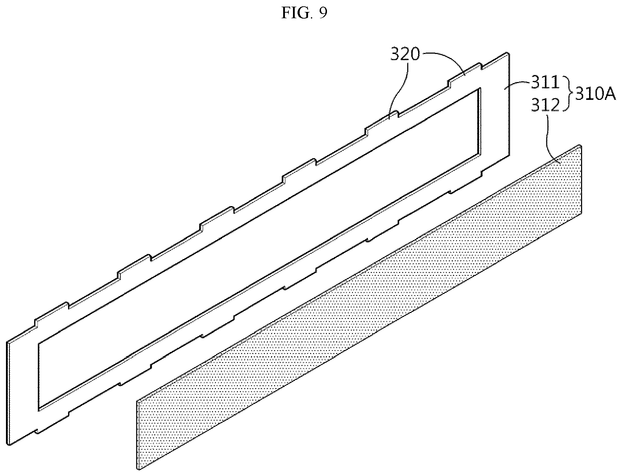

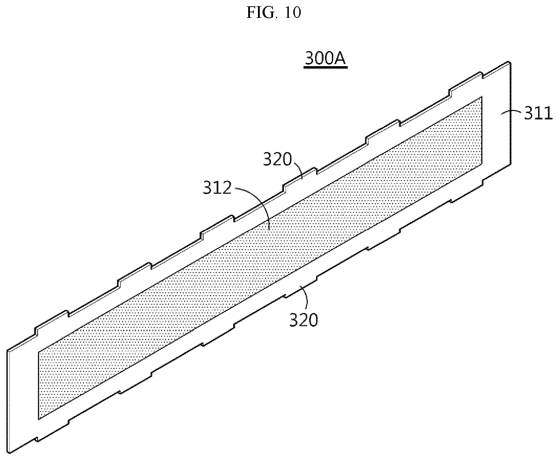

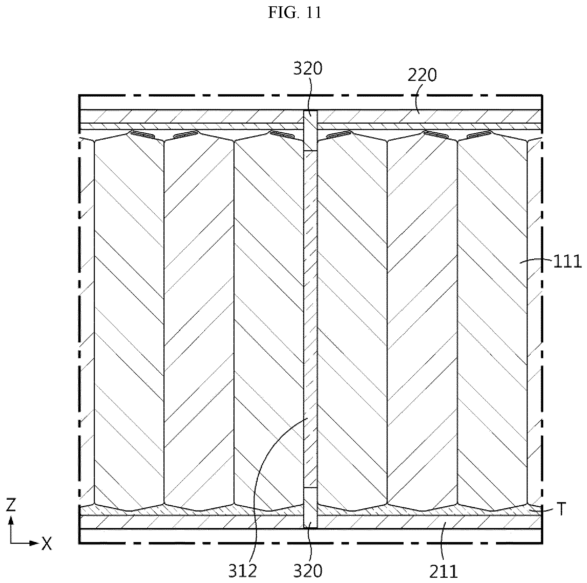

FIGS. 9 and 10 are respectively an exploded perspective view and a combined perspective view of a structural reinforcement beam according to another embodiment of the present disclosure. FIG. 11 is a diagram corresponding to FIG. 5, illustrating a partial cross-sectional view of a battery module to which the structural reinforcement beam of FIG. 10 is applied.

The same reference numerals as those in the previous drawings denote the same members, and repeated description of the same members will be omitted, and description will focus on differences from the above-described embodiment.

The battery module according to another embodiment of the present disclosure is different from the above-described battery module in a configuration of a structural reinforcement beam. A wall portion 310A of a structural reinforcement beam 200A according to the present embodiment includes an outer frame 311 that is in a form of a frame having an empty inner region and formed of a material having a high mechanical rigidity and a mica sheet 312 which has the same thickness as the outer frame 311 and is inserted into the inner region of the outer frame 311.

That is, the wall portion 310A of the structural reinforcement beam 300 according to the present embodiment is in a form in which the outer frame 311 having a rigid structure surrounds an outer circumferential portion of the mica sheet 312 formed of a flame retardant material, and the outer frame 311 and the mica sheet 312 have the same thickness.

By configuring the structural reinforcement beam 300A as described above, compared to the above-described embodiment in which the flame retardant 330 is attached to both sides of the wall portion 310, the weight and thickness of the structural reinforcement beam 300A may be reduced and propagation of thermal runaway between the first unit stack 110A and the second unit stack 110B may also be prevented. Furthermore, according to the present embodiment, the energy density of the battery module may be further improved by increasing a volume ratio of the battery cells 111 by a reduced thickness of the structural reinforcement beam 300 compared to the above-described embodiment.

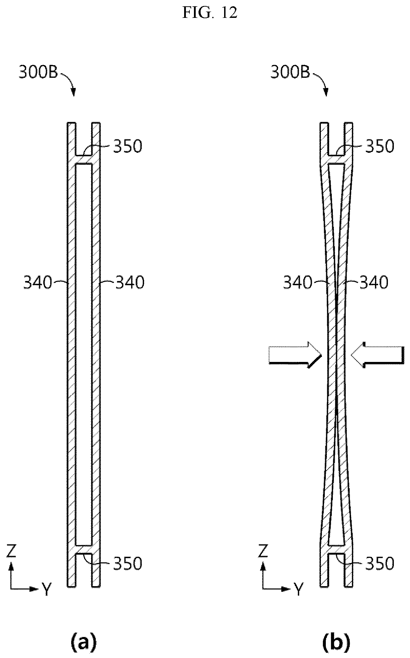

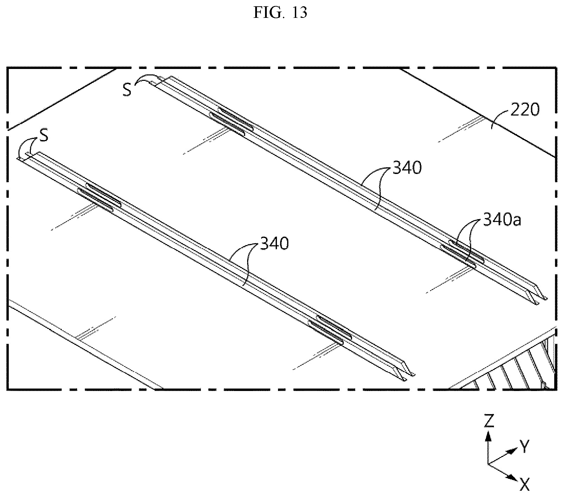

FIG. 12 includes diagrams illustrating a structural reinforcement beam 300B according to another embodiment of the present disclosure. FIG. 13 is a diagram illustrating an upper surface of a battery module, to which the structural reinforcement beam 300B of FIG. 12 is applied.

Referring to FIG. 12, the structural reinforcement beam 300B according to the present embodiment includes a pair of wall portions 340 facing each other at a certain distance and a pair of connecting portions 350 connecting between the pair of wall portions 340. The structural reinforcement beam 300B may be formed of a metal material having a high mechanical rigidity like the structural reinforcement beams of the above-described embodiments. The pair of wall portions 340 may be configured such that upper and lower ends thereof protrude out of the upper or lower surface of the module housing 200.

The base plate 211 and the upper plate 220 include a pair of insertion slits S elongated in a length direction (Y-axis direction) and having an interval therebetween, the interval corresponding to an interval between the pair of wall portions 340. Upper and lower ends of the pair of wall portions 340 may respectively pass through the pair of insertion slits S to be exposed to the outside of the module housing 200.

One of the pair of connection portions 350 is formed at a position downwardly spaced apart from the upper end of the wall portion340 by a certain distance. The other one of the pair of connection portions 350 is formed at a position upwardly spaced apart from the lower end of the wall portion340 by a certain distance. The connection portions 350 may function as a stopper preventing the structural reinforcement beam 300 from separating upwardly or downwardly from the module housing 200 via the insertion slits S. That is the connection portions 350 are located in an inner portion of the module housing 200. The pair of connection portions 350 may be spaced apart by a distance corresponding to a height of the module housing 200, that is, a distance between the base plate 211 and the upper plate 220.

Each of the pair of the wall portions 340 may be adhered to the battery cells 111, and may be elastically deformed such that center portions thereof are closer to each other via a pressure applied according to swelling of the battery cells 111. That is, the pair of wall portions 340 may have a function of absorbing the swelling of the battery cells 111.

In addition, the structural reinforcement beam 300B includes at least one handling hole 340a formed in a region exposed to the outside of the module housing 200 through the insertion slits S formed in the upper surface of the module housing 200, that is, in the upper plate 220. The handling hole 340a may be formed in both of the pair of wall portions 340 constituting the structural reinforcement beam 300B, or in any one of these. The handling hole 340a allows an operator to easily handle the battery module.

A battery pack (not shown) according to an embodiment of the present disclosure includes one or more of the battery modules described above. The battery pack may further include, in addition to the battery module, a case (not shown) for accommodating the battery module, and various devices (not shown) for controlling charging and discharging of the battery modules, such as a battery management system (BMS), a current sensor, a fuse, and the like.

The battery module according to an embodiment of the present disclosure may be applied to a vehicle such as an electric vehicle or a hybrid vehicle. That is, a vehicle according to an embodiment of the present disclosure may include the battery module according to an embodiment of the present disclosure.

In the present specification, while terms indicating directions such as up, down, left, right, etc. have been used, it will be obvious to those skilled in the art that these terms are only for convenience of description and may be expressed differently depending on the location of the object or the viewing position of the observer.

## Claims

1. A battery module comprising:
a cell stack structure (100) comprising a plurality of unit stacks (110) each including stacked battery cells (111);
a module housing (200) accommodating the cell stack structure (100); and
a structural reinforcement beam (300) arranged in parallel with the battery cells (111) and arranged between adjacent unit stacks (110),
wherein upper and lower end portions of the structural reinforcement beam (300) are respectively partially inserted into and fixedly coupled to an upper surface and a lower surface of the module housing (200) such that the unit stacks (110) are spatially spaced apart from each other,
wherein the structural reinforcement beam (300) comprises:
- a wall portion arranged to stand in an inner space of the module housing (200);
and
- insertion protrusions (320) protruding from an upper end of the wall portion and a lower end of the wall portion in a length direction of the wall portion at certain intervals,
wherein the wall portion (310) comprises:
- an outer frame (311) that is in a form of a frame having an empty inner region and formed of a material having a high mechanical rigidity; and
- a mica sheet (312) which has the same thickness as the outer frame (311) and is inserted into the inner region of the outer frame (311).

2. The battery module of claim 1, wherein the structural reinforcement beam (300) is formed of a rigid material and has a plate shape having an area corresponding to a broad surface of the battery cells (111).

3. The battery module of claim 1, wherein the module housing (200) comprises insertion holes (H) that are formed to penetrate through the upper and lower surfaces of the module housing (200) at positions respectively corresponding to the insertion protrusions (320) on a one-on-one basis.

4. The battery module of claim 3, wherein ends of the insertion protrusions (320) are welded to the module housing (200) while the insertion protrusions (320) are respectively inserted into the insertion holes (H) by interference fit.

5. The battery module of claim 1, wherein the structural reinforcement beam (300) further comprises a flame retardant (330) attached to at least one surface of the wall portion (310).

6. The battery module of claim 5, wherein the flame retardant (330) comprises a mica sheet (312) or a silicon pad.

7. The battery module of claim 1, wherein the module housing (200) comprises:
a U-frame (210) comprising a base plate (211) and a pair of side plates (212) respectively supporting a lower portion and both side portions of the cell stack structure (100);
an upper plate (220) covering an upper portion of the cell stack structure (100); and
a front plate (230) and a rear plate (240) respectively covering a front portion and a rear portion of the cell stack structure (100).

8. The battery module of claim 7, wherein the base plate (211) and the pair of side plates (212) of the U-frame (210) are integrally formed as a single body, and
the U-frame (210) is welded to the upper plate (220), the front plate (230), and the rear plate (240).

9. The battery module of claim 7, further comprising a pair of terminal supporting members (400) arranged in an upper left corner region and an upper right corner region of the front plate (230) and connected to a positive electrode terminal (130) and a negative electrode terminal (140) protruding forward from the cell stack structure (100).

10. The battery module of claim 9, wherein the terminal supporting members (400) comprise:
a body portion (410) formed of an insulating material;
a screw hole (420) formed in the body portion (410) in a vertical direction; and
a terminal slit (430) formed horizontally in an upper portion of the screw hole (420) such that the positive electrode terminal (130) or the negative electrode terminal (140) passes through the terminal slit (430).

11. The battery module of claim 1, wherein the structural reinforcement beam (300) comprises:
a pair of wall portions (340) facing each other and spaced apart from each other; and
a pair of connection portions (350) respectively formed at a position downwardly spaced apart from an upper end of the pair of wall portions (340) by a certain distance and at a position upwardly spaced apart from a lower end of the pair of wall portions (340) by a certain distance, the pair of connection portions (350) connecting the pair of wall portions (340) to each other.

12. The battery module of claim 11, wherein the upper end of the pair of wall portions (340) is exposed to the upper portion of the module housing (200) and comprises at least one handling hole formed in the exposed region.

13. A battery pack comprising the battery module according to any one of claims 1 through 12.

## Patentansprüche

1. Batteriemodul aufweisend:
eine Zellenstapelstruktur (100) aufweisend mehrere Einheitsstapel (110), die jeweils gestapelte Batteriezellen (111) aufweisen;
ein Modulgehäuse (200), das die Zellenstapelstruktur (100) aufnimmt; und
einen Strukturverstärkungsträger (300), der parallel zu den Batteriezellen (111) angeordnet ist und zwischen benachbarten Einheitsstapeln (110) angeordnet ist,
wobei ein obere Endabschnitt und ein unterer Endabschnitt des Strukturverstärkungsträgers (300) jeweilig teilweise in eine obere Oberfläche und eine untere Oberfläche des Modulgehäuses (200) eingesetzt und damit fest gekoppelt sind, so dass die Einheitsstapel (110) räumlich voneinander beabstandet sind,
wobei der Strukturverstärkungsträger (300) aufweist:
- einen Wandabschnitt, der angeordnet ist, um in einem Innenraum des Modulgehäuses (200) zu stehen; und
- Einsetzvorsprünge (320), die von einem oberen Ende des Wandabschnitts und einem unteren Ende des Wandabschnitts in einer Längsrichtung des Wandabschnitts in bestimmten Intervallen vorstehen,
wobei der Wandabschnitt (310) aufweist:
- einen äußeren Rahmen (311), der in einer Form eines Rahmens mit einem leeren Innenbereich vorliegt und aus einem Material mit einer hohen mechanischen Steifigkeit gebildet ist; und
- ein Mica-Blatt (312), das die gleiche Dicke wie der äußere Rahmen (311) aufweist und in den Innenbereich des äußeren Rahmens (311) eingesetzt ist.

2. Batteriemodul nach Anspruch 1, wobei der Strukturverstärkungsträger (300) aus einem starren Material gebildet ist und eine Plattenform mit einer Fläche aufweist, die einer breiten Oberfläche der Batteriezellen (111) entspricht.

3. Batteriemodul nach Anspruch 1, wobei das Modulgehäuse (200) Einsetzlöcher (H) aufweist, die so ausgebildet sind, dass sie durch die obere Oberfläche und die untere Oberfläche des Modulgehäuses (200) an Positionen, die jeweils den Einsetzvorsprüngen (320) entsprechen, auf einer Eins-zu-Eins-Basis verlaufen.

4. Batteriemodul nach Anspruch 3, wobei Enden der Einsetzvorsprünge (320) an das Modulgehäuse (200) geschweißt sind, wobei die Einsetzvorsprünge (320) jeweils durch Presspassung in die Einsetzlöcher (H) eingefügt sind.

5. Batteriemodul nach Anspruch 1, wobei der Strukturverstärkungsträger (300) ferner ein Flammschutzmittel (330) aufweist, das an mindestens einer Oberfläche des Wandabschnitts (310) angebracht ist.

6. Batteriemodul nach Anspruch 5, wobei das Flammschutzmittel (330) ein Mica-Blatt (312) oder ein Silikonpad aufweist.

7. Batteriemodul nach Anspruch 1, wobei das Modulgehäuse (200) aufweist:
einen U-Rahmen (210) aufweisend eine Basisplatte (211) und ein Paar Seitenplatten (212), die jeweilig einen unteren Abschnitt und zwei Seitenabschnitte der Zellenstapelstruktur (100) tragen;
eine obere Platte (220), die einen oberen Abschnitt der Zellenstapelstruktur (100) abdeckt; und
eine vordere Platte (230) und eine hintere Platte (240), die jeweils einen vorderen Abschnitt und einen hinteren Abschnitt der Zellenstapelstruktur (100) abdecken.

8. Batteriemodul nach Anspruch 7, wobei die Basisplatte (211) und das Paar Seitenplatten (212) des U-Rahmens (210) einstückig als ein einzelner Körper ausgebildet sind, und
der U-Rahmen (210) an die obere Platte (220), die vordere Platte (230) und die hintere Platte (240) geschweißt ist.

9. Batteriemodul nach Anspruch 7, ferner aufweisend ein Paar Anschlusstragelemente (400), die in einem oberen linken Eckbereich und einem oberen rechten Eckbereich der vorderen Platte (230) angeordnet sind und mit einem positiven Elektrodenanschluss (130) und einem negativen Elektrodenanschluss (140) verbunden sind, die von der Zellenstapelstruktur (100) nach vorne vorstehen.

10. Batteriemodul nach Anspruch 9, wobei die Anschlusstragelemente (400) aufweisen:
einen Körperabschnitt (410), der aus einem isolierenden Material gebildet ist;
ein Schraubenloch (420), das in dem Körperabschnitt (410) in einer vertikalen Richtung ausgebildet ist; und
einen Anschlussschlitz (430), der horizontal in einem oberen Abschnitt des Schraubenlochs (420) ausgebildet ist, so dass der positive Elektrodenanschluss (130) oder der negative Elektrodenanschluss (140) durch den Anschlussschlitz (430) verläuft.

11. Batteriemodul nach Anspruch 1, wobei der Strukturverstärkungsträger (300) aufweist:
ein Paar Wandabschnitte (340), die einander zugewandt und voneinander beabstandet sind; und
ein Paar Verbindungsabschnitte (350), die jeweils an einer Position ausgebildet sind, die von einem oberen Ende des Paars Wandabschnitte (340) um einen bestimmten Abstand nach unten beabstandet ist, und an einer Position ausgebildet sind, die von einem unteren Ende des Paars Wandabschnitte (340) um einen bestimmten Abstand nach oben beabstandet ist, wobei das Paar Verbindungsabschnitte (350) das Paar Wandabschnitte (340) miteinander verbindet.

12. Batteriemodul nach Anspruch 11, wobei das obere Ende des Paars Wandabschnitte (340) zu dem oberen Abschnitt des Modulgehäuses (200) freiliegt und mindestens ein Handhabungsloch aufweist, das in dem freiliegenden Bereich ausgebildet ist.

13. Batteriepack aufweisend das Batteriemodul nach einem der Ansprüche 1 bis 12.

## Revendications

1. Module de batterie comprenant :
une structure d'empilements d'éléments (100) comprenant une pluralité d'empilements d'unités (110) chacun incluant des éléments de batterie empilés (111) ;
un boîtier de module (200) accueillant la structure d'empilements d'éléments (100) ; et
une barre de renforcement structurel (300) disposée en parallèle avec les éléments de batterie (111) et disposée entre des empilements d'unités adjacents (110),
dans lequel des parties extrémités supérieure et inférieure de la barre de renforcement structurel (300) sont respectivement partiellement introduites dans et couplées de manière fixe à une surface supérieure et à une surface inférieure du boîtier de module (200) de telle sorte que les empilements d'unités (110) sont espacés spatialement les uns des autres,
dans lequel la barre de renforcement structurel (300) comprend :
- une partie paroi disposée pour tenir dans un espace intérieur du boîtier de module (200) ; et
- des saillies d'insertion (320) saillant d'une extrémité supérieure de la partie paroi et d'une extrémité inférieure de la partie paroi dans une direction de longueur de la partie paroi à certains intervalles,
dans lequel la partie paroi (310) comprend :
- un cadre extérieur (311) qui est sous la forme d'un cadre ayant une région intérieure vide et formé d'un matériau ayant une rigidité mécanique élevée ; et
- une feuille de mica (312) qui a la même épaisseur que le cadre extérieur (311) et est introduite dans la région intérieure du cadre extérieur (311).

2. Module de batterie selon la revendication 1, dans lequel la barre de renforcement structurel (300) est formée d'un matériau rigide et a une forme de plaque ayant une zone correspondant à une surface large des éléments de batterie (111).

3. Module de batterie selon la revendication 1, dans lequel le boîtier de module (200) comprend des trous insertion (H) qui sont formés pour pénétrer à travers les surfaces supérieure et inférieure du boîtier de module (200) à des positions correspondant respectivement aux saillies d'insertion (320) sur une base individuelle.

4. Module de batterie selon la revendication 3, dans lequel les extrémités des saillies d'insertion (320) sont soudées au boîtier de module (200) tandis que les saillies d'insertion (320) sont introduites respectivement dans les trous insertion (H) par ajustement serré.

5. Module de batterie selon la revendication 1, dans lequel la barre de renforcement structurel (300) comprend en outre un produit ignifuge (330) fixé à au moins une surface de la partie paroi (310).

6. Module de batterie selon la revendication 5, dans lequel le produit ignifuge (330) comprend une feuille de mica (312) ou un tampon en silicone.

7. Module de batterie selon la revendication 1, dans lequel le boîtier de module (200) comprend :
un cadre en U (210) comprenant une plaque de base (211) et une paire de plaques latérales (212) soutenant respectivement une partie inférieure et les deux parties latérales de la structure d'empilements d'éléments (100) ;
une plaque supérieure (220) couvrant une partie supérieure de la structure d'empilements d'éléments (100) ; et
une plaque avant (230) et une plaque arrière (240) couvrant respectivement une partie avant et une partie arrière de la structure d'empilements d'éléments (100).

8. Module de batterie selon la revendication 7, dans lequel la plaque de base (211) et la paire de plaques latérales (212) du cadre en U (210) sont formées intégralement en un seul corps, et
le cadre en U (210) est soudé à la plaque supérieure (220), la plaque avant (230) et la plaque arrière (240).

9. Module de batterie selon la revendication 7, comprenant en outre une paire d'éléments de support de bornes (400) disposés dans une région de coin supérieur gauche et une région de coin supérieur droit de la plaque avant (230) et raccordés à une borne d'électrode positive (130) et à une borne d'électrode négative (140) saillant vers l'avant depuis la structure d'empilements d'éléments (100).

10. Module de batterie selon la revendication 9, dans lequel les éléments de support de borne (400) comprennent :
une partie corps (410) formée d'un matériau isolant ;
un trou de vis (420) formé dans la partie corps (410) dans une direction verticale ; et
une fente de borne (430) formée horizontalement dans une partie supérieure du trou de vis (420) de telle sorte que la borne d'électrode positive (130) ou la borne d'électrode négative (140) passe à travers la fente de borne (430).

11. Module de batterie selon la revendication 1, dans lequel la barre de renforcement structurel (300) comprend :
une paire de parties parois (340) en face l'une de l'autre et espacées l'une de l'autre ; et
une paire de parties raccordements (350) formées respectivement à une position espacée vers le bas depuis une extrémité supérieure de la paire de parties parois (340) d'une certaine distance et à une position espacée vers le haut depuis une extrémité inférieure de la paire de parties parois (340) d'une certaine distance, la paire de parties raccordements (350) raccordant la paire de parties parois (340) l'une à l'autre.

12. Module de batterie selon la revendication 11, dans lequel l'extrémité supérieure de la paire de parties parois (340) est exposée à la partie supérieure du boîtier de module (200) et comprend un ou plusieurs trous de manipulation formés dans la région exposée.

13. Bloc-batterie comprenant le module de batterie selon l'une quelconque des revendications 1 à 12.
